# EUROPEAN PATENT SPECIFICATION

(11) **EP 1 746 910 B1**
(45) Date of publication and mention of the grant of the patent: **03.03.2010**
(21) Application number: 05743016.7
(22) Date of filing: 09.05.2005
(51) Int. Cl.: A42B 3/04, B62J 27/00

(54) **SECURITY SYSTEM FOR MOTORCYCLE CRASH HELMET**
SICHERHEITSSYSTEM FÜR MOTORRADSTURZHELM
SYSTEME DE SECURITE POUR CASQUE DE MOTOCYCLE

(30) Priority: 19.05.2004 IT MI20041001
(43) Date of publication of application: 31.01.2007
(73) Proprietor: Know How S.r.l., 20123 Milan (IT)
(72) Inventor: LUCIANI, Massimiliano, 20093 Cologno Monzese MI (IT)
(74) Representative: Monti, Rinaldo
(86) International application number: PCT/IT2005/000269
(87) International publication number: WO 2005/110138

(56) References cited:
- EP-A- 0 315 498
- EP-A- 0 346 300
- WO-A-97/28710
- DE-A1- 19 934 188
- FR-A- 2 751 293
- US-A- 4 982 452

## Description

The present invention refers to a security system for motorcycle crash helmet. As known, the current regulations for traffic security enforce the obligation to wear a crash helmet during the use of a motorcycle. However, many motorcycle drivers continue to infringe such regulations and do not wear any crash helmet during motorcycle riding.

Other regulations enforce the prohibition for a motorcycle driver to use cellular phones. In this case also many motorcycle drivers infringe such regulations and they use cellular phones also during the travel.

Other drawbacks for users are the several thefts both of crash helmets and motorcycles.

It is already known from WO 97/28710 A (PANUNZIO, MARCO) an electronic safety system for motorcyclists which comprises interacting electronic devices placed in the crash helmet and in the vehicle which can communicate among them through electromagnetic waves if the crash helmet is oriented as it would be when it is worn on the head of the motorcyclist in order to allow the starting of the engine of the motorcycle. EP 0 346 300 A1 discloses a safety device for the users of vehicles, particularly mopeds comprising means for preventing the operation of the vehicle and means, associated with the helmet, for deactivating the prevention means and operative only when the helmet is being worn. The device comprises a transmitter unit incorporated in the helmet and including electrical supply means for emitting coded signals, sensor means for detecting the fact that the helmet is being worn, and a control unit connected to the sensor means and to the emitter means and arranged to activate the emitter means only when the sensor means detect the fact that the helmet is being worn, and a receiver unit fitted to the vehicle and including an electrical supply, and means for receiving the coded signals, means for preventing the operation of the engine of the vehicle and a control unit connected to the receiver means and to the prevention means and arranged to switch on the prevention means in the absence of the coded signals.

An object of the present invention is to provide a security system for a motorcycle crash helmet which enforces the use of a crash helmet during motorcycle riding.

Another object of the present invention is to provide a security system for a motorcycle crash helmet which replaces the cellular phone, in order to allow the user to listen and answer safely to the calls on his own cellular phone.

Another object of the present invention is to provide a security system for motorcycle crash helmets which also works as an antitheft device, in order to avoid both the theft of the crash helmet and of the motorcycle.

These objects are reached according to the invention with the characteristics listed in the enclosed independent claim 1.

Advantageous embodiments of the invention are disclosed in dependent claims.

The security system for motorcycle crash helmets according to the invention includes a security device installed in the crash helmet and a control device installed in the motorcycle. The security and control devices communicate through radio waves (namely wireless).

The control device comprises a normally open switch, placed between the power supply and the ignition system of the motorcycle. Such a switch is driven by a wireless communication device which communicates with a wireless communication device installed into the crash helmet security device.

The security device comprises a smart card reader comprising detection means suited to detect the crash helmet use by the user and, accordingly, to send a command signal in order to enable said crash helmet communication system to communicate with the motorcycle communication system, to close the control device switch and allow the motorcycle ignition.

In this way the motorcycle can be ignited only when the detection means detect that the crash helmet is worn by the user.

Further characteristics of the invention will became more clear from the following detailed description shown in the drawings enclosed, which refers to a merely exemplary form and is not intended as a limiting embodiment, in which:
- figure 1 is a partial perspective view showing a crash helmet and a motorcycle, in which the security system according to the invention is installed;
- figure 2 is a block diagram showing the security system according to the invention;
- figure 2A is a first embodiment of the crash helmet security system according to the invention;
- figure 2B is a second embodiment of the crash helmet security system according to the invention; and
- figure 3 is a block diagram showing the operation of the security system according to the invention in its function of cellular phone.

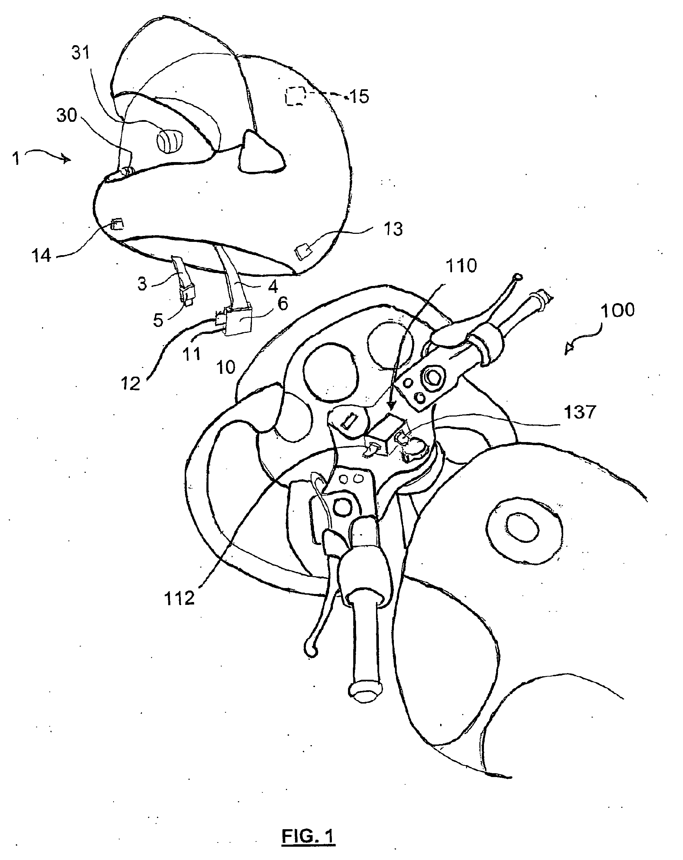

In figure 1 a crash helmet, marked as a whole by the reference number 1, is shown. From the lower edge of the crash helmet 1, two length adjustable strips 3, 4 protrude, respectively ending in a clasp 5 and in a locking block 6 in which the clasp 5 snaps. In this way, strips 3, 4 pass under the user chin, holding the crash helmet in position.

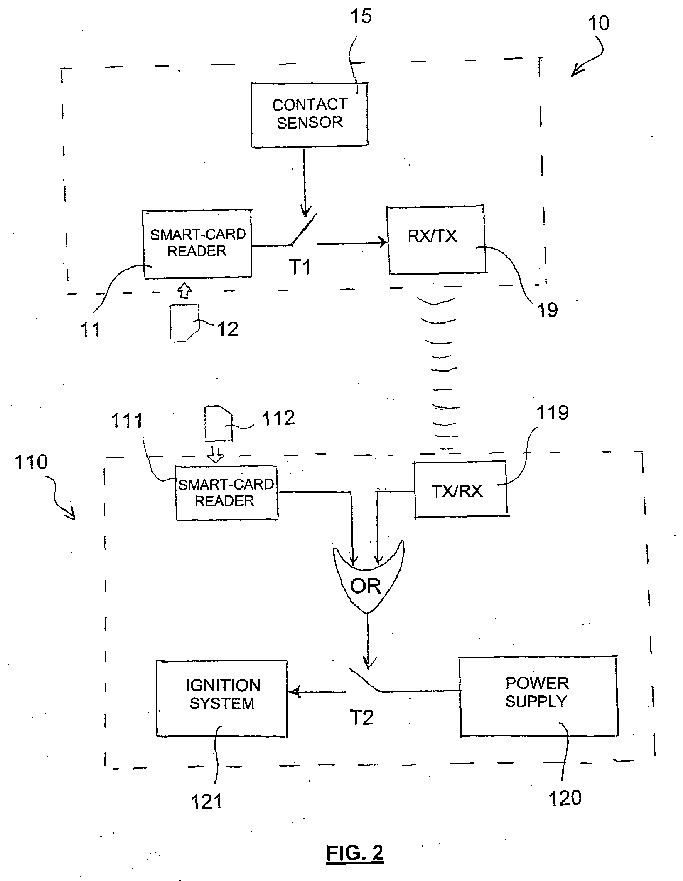

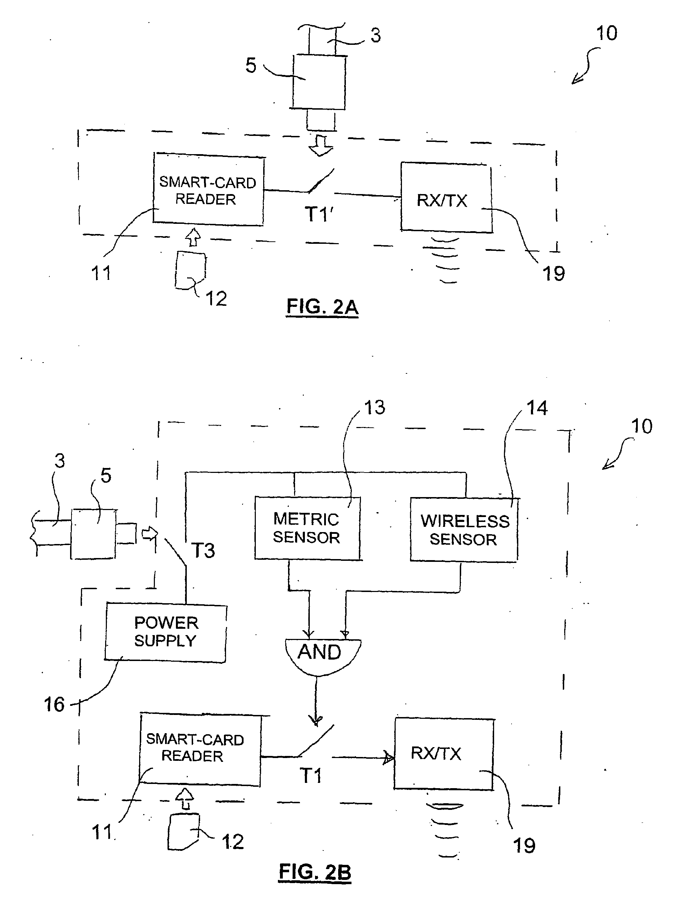

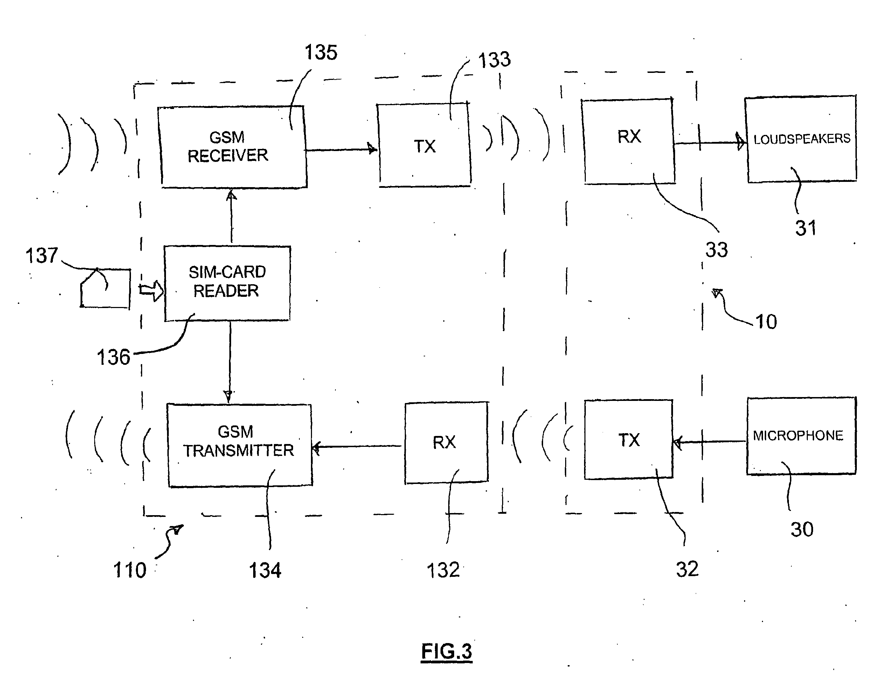

Into the locking block 6, a security device 10 which will be described in further detail with reference to figures 2, 2A, 2B and 3 is integrated. Clearly, the security device 10 can alternatively be integrated in another portion of the crash helmet.

Referring now to figures 1 and 2, the security device 10 comprises a smart-card reader 11 suited to read a smart-card 12 in which a secret code is codified. The smart-card 12 is supplied to the owner of the crash helmet 1 by the motorcycle manufacturer who sells the motorcycle 100 to the owner of the crash helmet 1.

Into the motorcycle 100, a control device 110 suited to communicate with the security device 10 of crash helmet 1, is installed, as will be described in further detail with reference to figures 2 and 3. As such, the control device 110 recognizes the code of the smart-card 12 inserted into the reader 11 of security device 10. For example, as shown in figure 1, the control device 110 can be installed on the central upper portion of the handlebar of the motorcycle 100.

Turning back to figure 2, the control device 110 provides a normally open switch T2 which interrupts communication between the motorcycle power supply 120 and the motorcycle ignition system 121.

The smart-card reader 11 of the security device 10 is connected, through a normally open switch T1, to a passive communication device 19, such as a passive transceiver. The passive communication device 19 of the crash helmet security device is coupled to communicate, through radio waves (wireless), with an active communication system 119, such as an active transceiver, installed into the motorcycle control device 110.

Switch T1 of the security device is driven by a contact sensor 15 placed within the crash helmet 1. Upon detecting the user head inside the crash helmet 1, the contact sensor 15 sends a command signal to switch T1, which closes, putting the smart-card reader 11 and the passive transceiver 19 into communication.

In this way, when the switch T1 is closed, the active transceiver 119 reads and recognizes the code of the smart-card 12 through the passive transceiver 19. Once the code is recognized, the active transceiver 119 sends a command signal to switch T2, which closes allowing the motorcycle ignition. As a result, with the system according to the invention, the motorcycle ignition is impossible unless the user wears the crash helmet.

For greater safety, to avoid that the motorcycle 100 remains ignited even when the user wearing the crash helmet is far from the motorcycle, for example in case of accident, the two wireless communication devices 19, 119 are arranged to communicate only within a short range, e.g. a distance lower than 2 meters. Therefore, when the user wearing the crash helmet is farther than 2 meters from the motorcycle 100, the active communication device 119 can not read the code of the smart-card 12 and so switch T2 opens, causing the motorcycle to switch off.

In this way the crash helmet 1 also functions as an antitheft device for motorcycle 100. As a matter of fact, the motorcycle 100 can not be ignited unless the user wears the crash helmet 1 with its related smart-card 12.

If the user loses the smart-card 12 of the crash helmet security device or the crash helmet is stolen, the control device 110 is provided also with a smart-card reader 111 suited to read a reserve smart-card 112, which matches the smart-card 12 of the crash helmet security device. In this way the smart-card reader 111, when reading the reserve smart-card 112, bypasses transceiver 119 and closes switch T2 to allow the motorcycle ignition. For example, the output signal of the active transceiver 119 and the output signal of the smart-card reader 111 can be sent to a logic OR whose output commands switch T2.

In a first modification of security system 10, as shown in figure 2A, instead of or in addition to the contact sensor 15, a normally open mechanical snap switch T1', placed within the locking block 6 of clasp 5, can be provided. The switch T1' closes when clasp 5 snaps into the locking block 6, putting the smart-card reader 11 and the passive transceiver 19 into contact.

In order to avoid that clasp 5 is inserted into the locking block 6 when the user does not wear the crash helmet, a second modification of the security device 10 is implemented, as shown in figure 2B.

In this case, a first metric type sensor 13, suited to detect the crash helmet distance from the ground, and a second radio wave type sensor 14, suited to communicate with the control device 110 of motorcycle 100 in order to detect the crash helmet distance from motorcycle 100, are installed into the crash helmet 1 (figure 1). The metric sensor 13 is set to send a command signal when it is at a distance greater than 1,5 meters from the ground, and the wireless sensor 14 is set to send a command signal when it is at a distance lower than 2 meters from the motorcycle.

With reference to figure 2B, the security device 10 comprises a power supply 16 which, through a normally open mechanical switch T3, is connected to a power supply line that supplies the two sensors 13 and 14. The two sensors outputs are connected to a logic AND whose output controls switch T1, which puts the smart-card reader 11 and the passive communication device 19 into communication.

As a result, the active communication device 119 reads the code of the smart-card 12, through the passive communication device 19, only when the crash helmet in fastened, it is at a distance greater than 1,5 meters from the ground, and it is at a distance lower than 2 meters from the motorcycle 100.

The function of the ground distance sensor 13 is to avoid the use of motorcycle 100 if the fastened crash helmet is placed on the handlebar and not worn. On the other hand, the function of the motorcycle distance sensor 14 it to assure that the motorcycle switches off if the user wearing the crash helmet is far from the motorcycle, for example in case of accident.

Optionally, as shown in figure 1, a microphone 30, placed within the chin rest, in register with the user's mouth, and a couple of loudspeakers 31 (only one visible in figure 1), placed within the crash helmet into the side walls, in register with the user's ears, are installed into the crash helmet 1.

As shown in figure 3, the microphone 30 is connected to a wireless transmitter 32 and the loudspeakers 31 are connected to a wireless receiver 33. The wireless transmitter 32 and receiver 33 are integrated into the security device 10 of crash helmet 1 and are coupled into communication with a wireless receiver 132 and a wireless transmitter 133, respectively, installed within the control device 110 of motorcycle 100.

The wireless receiver 132 and wireless transmitter 133 are connected to a GSM transmitter 134 and a GSM receiver 135, respectively, also installed within the control device 110 of motorcycle 100. In this case, also a SIM-card reader 136, suited to read a telephone SIM-card 137, is integrated into control device 110. The SIM-card reader 136 is connected to the GSM transmitter 134 and to the GSM receiver 135.

In this way, the user can put the telephone SIM-card 137 of his own cellular phone into the corresponding reader 136. Therefore, when he receives a call at his own SIM-card number, the GSM transmitter 134 and the GSM receiver 135 are enabled and, through the wireless transmitters and receivers 132, 32 and 133, 33, communicate with the microphone 30 and the loudspeakers 31 provided in the crash helmet 1. In this way the user can listen and answer to calls during travel, keeping his hands on the handlebar.

It is to be noted that the security system 10 can provide a power supply 16 (figure 2B) which, apart from supplying sensors 13 and 14, can supply also the contact sensor 15, the smart-card reader 11 and the communication device 19. The power supply 16 can be a disposable battery, a rechargeable battery or, preferably, a storage battery connected to photovoltaic cells placed on the crash helmet 1.

In case of rechargeable batteries, their recharging can be performed, by way of the motorcycle power supply, connecting the security device 10 to the control device 110 when the motorcycle 100 is not in use.

As further security system, into the control device 110 can be provided a tilt sensor, connected to a timer, in order to detect if the motorcycle lays on the ground for a given time period, e.g. because of an accident. Said timer can be in turn connected to the switch T2, to which, after a predetermined time period, it sends a signal to allow said switch T2 to open and, consequently, the motorcycle 100 to switch off. The timer can be also connected to the GSM transmitter 134 in order to generate an alarm signal.

It can also be contemplated that the system, through the GSM transmitter 234, could make a telephone call with a registered message to the motorcycle owner in case of theft or, in case of an accident, which is detected for example through the tilt sensor, it could generate a call that the user, if conscious, can use to ask for help and report his position.

It is also possible to equip the crash helmet of the present invention so as to allow it to receive by radio the signals from an MP3 reader or other music reader.

Many modifications and changes can be done to the present embodiments of the invention by one skilled in the art, which changes are still within the scope of the invention as defined by the appended claims.

## Claims

1. Security system for the crash helmet (1) of a motorcycle (100) comprising a security system (10) installed into the crash helmet (1) which communicates through radio waves (wireless) with the control device (110) installed in the motorcycle (100),
said control device (110) including a normally open switch (T2) placed between the power supply (120) and the ignition system (121) of the motorcycle, and being driven by a wireless communication device (119) which communicates with a wireless communication device (19) installed into said crash helmet security device (10),
said security device (10) including detection means (15, 5-6, 13, 14) placed in the crash helmet (1) which are suited to detect the presence of the user head in the crash helmet (1) and locking of the crash helmet (1) in order to generate a command signal which enables said crash helmet communication system (19) to communicate with the motorcycle communication system (119) to send a command signal which causes the switch (T2) to be placed in its conduction state allowing the motorcycle ignition, **characterized in that**
said motorcycle security device (10) comprises a smart-card reader (11) connected, through a normally open switch (T1), to said crash helmet communication system (19), said smart-card reader (11) being suited to read a smart-card (12) in which a secret code is codified.

2. Security system according to claims 1, **characterized in that** said motorcycle control device (110) comprises a smart-card reader (111) suited to read a reserve smart-card (112) in order to enable the motorcycle ignition without the smart-card (12) being into the reader (11) of the crash helmet security device.

3. Security system according to one or more of the previous claims, **characterized in that** one of said detection means comprises a metric sensor (13) placed in the outside of the crash helmet (1) to detect the distance of the crash helmet from the ground.

4. Security system according to one or more of the previous claims, **characterized in that** one of said detection means comprises a wireless sensor (14) placed in the outside of the crash helmet (1) and communicating with a transmitter installed in the motorcycle (100) in order to detect the distance of the crash helmet from the motorcycle (100).

5. Security system according to one or more of the previous claim, **characterized in that** said crash helmet communication device (19) and said motorcycle communication device (119) are arranged to communicate within distances lower than 2 meters.

6. Security system according to one or more of the previous claim, **characterized in that** it provides a tilt sensor within said control device (110), such a tilt sensor being suited, in cooperation with a timer, to evaluate whether the motorcycle lays on the ground more than a predetermined period of time.

7. Security system according to one or more of the previous claim, **characterized in that** said crash helmet is equipped to receive signals by radio from a music reader.

8. Security system according to one or more of the previous claim, **characterized in that** said motorcycle control device (110) comprises:
- a GSM transceiver (134, 135) enabled by a SIM-card reader (136) by means of a telephone SIM-card (137), and
- a wireless transceiver (132, 133) connected to said GSM transceiver (134, 135) and communicating, by means of radio waves, with a wireless transceiver (32, 33) installed into said crash helmet security device (10) and connected to a microphone (30) and to two loudspeakers (31) mounted into the crash helmet (1).

## Patentansprüche

1. Sicherheitssystem für den Sturzhelm (1) eines Motorrades (100), umfassend ein Sicherheitssystem (10), das in den Sturzhelm (1) eingebaut ist, welches mit der Steuervorrichtung (110), die in das Motorrad (100) eingebaut ist, über Funkwellen (drahtlos) kommuniziert,
wobei diese Steuervorrichtung (110) einen normalerweise offenen Schalter (T2) einschließt, der zwischen der Stromversorgung (120) und dem Zündsystem (121) des Motorrades platziert ist, und durch eine drahtlose Kommunikationsvorrichtung (119) betätigt wird, die mit einer drahtlosen Kommunikationsvorrichtung (19), die in die Sicherheitsvorrichtung (10) des Sturzhelms eingebaut ist, kommuniziert,
wobei diese Sicherheitsvorrichtung (10) Erkennungsmittel (15, 5-6, 13, 14), die in dem Sturzhelm (1) platziert sind, einschließt, welche geeignet sind, die Anwesenheit des Benutzerkopfes in dem Sturzhelm (1) und die Verriegelung des Sturzhelms (1) zu erkennen, um ein Befehlssignal zu erzeugen, welches das Sturzhelm-Kommunikationssystem (19) zur Kommunikation mit dem Motorrad-Kommunikationssystem (119) aktiviert, um ein Befehlssignal zu senden, wodurch der Schalter (T2) in seinen Leitungszustand versetzt wird, was die Motorradzündung ermöglicht, **dadurch gekennzeichnet, dass**
diese Motorrad-Sicherheitsvorrichtung (10) ein Smart-Card-Lesegerät (11) umfasst, das durch einen normalerweise offenen Schalter (T1) mit dem Sturzhelm-Kommunikationssystem (19) verbunden ist, wobei das Smart-Card-Lesegerät (11) geeignet ist, eine Smart-Card (12), auf der ein Geheimcode kodifiziert ist, auszulesen.

2. Sicherheitssystem nach Anspruch 1, **dadurch gekennzeichnet, dass** diese Motorrad-Steuervorrichtung (110) ein Smart-Card-Lesegerät (111) umfasst, das geeignet ist, eine Reserve-Smart-Card (112) auszulesen, um die Motorradzündung zu ermöglichen, ohne dass die Smart-Card (12) in das Lesegerät (11) der Sturzhelm-Sicherheitsvorrichtung eingefügt ist.

3. Sicherheitssystem nach einem oder mehreren der vorhergehenden Ansprüche, **dadurch gekennzeichnet, dass** eines von diesen Erkennungsmitteln einen metrischen Sensor (13) umfasst, der in der Außenseite des Sturzhelms (1) platziert ist, um den Abstand des Sturzhelms vom Erdboden zu erkennen.

4. Sicherheitssystem nach einem oder mehreren der vorhergehenden Ansprüche, **dadurch gekennzeichnet, dass** dieses Erkennungsmittel einen Funksensor (14) umfasst, der in der Außenseite des Sturzhelms (1) platziert ist und mit einem Sender kommuniziert, der in das Motorrad (100) eingebaut ist, um den Abstand des Sturzhelms von dem Motorrad (100) zu erkennen.

5. Sicherheitssystem nach einem oder mehreren der vorhergehenden Ansprüche, **dadurch gekennzeichnet, dass** die Sturzhelm-Kommunikationsvorrichtung (19) und die Motorrad-Kommunikationsvorrichtung (119) derart angeordnet sind, dass sie bei einem Abstand von weniger als 2 Metern kommunizieren.

6. Sicherheitssystem nach einem oder mehreren der vorhergehenden Ansprüche, **dadurch gekennzeichnet, dass** es einen Kippsensor innerhalb der Steuervorrichtung (110) bereitstellt, wobei ein derartiger Kippsensor geeignet ist, im Zusammenwirken mit einem Zeitmesser zu beurteilen, ob das Motorrad länger als eine vorausbestimmte Zeitspanne auf dem Erdboden liegt.

7. Sicherheitssystem nach einem oder mehreren der vorhergehenden Ansprüche, **dadurch gekennzeichnet, dass** der Sturzhelm ausgerüstet ist, Signale über Funk von einem Musiklesegerät zu empfangen.

8. Sicherheitssystem nach einem oder mehreren der vorhergehenden Ansprüche, **dadurch gekennzeichnet, dass** die Motorrad-Steuervorrichtung (110) Folgendes umfasst:
- einen GSM-Sender-Empfänger (134, 135), der durch ein SIM-Karten-Lesegerät (136) mittels einer Telefon-SIM-Karte (137) aktiviert wird, und
- einen Drahtlos-Sender-Empfänger (132, 133), der mit dem GSM-Sender-Empfänger (134, 135) verbunden ist und mittels Funkwellen mit einem Drahtlos-Sender-Empfänger (32, 33) kommuniziert, der in die Sicherheitsvorrichtung (10) des Sturzhelms eingebaut und mit einem Mikrofon (30) und zwei Lautsprechern (31), die in dem Sturzhelm (1) montiert sind, verbunden ist.

## Revendications

1. Système de sécurité pour le casque de protection (1) d'un motocycle (100) comprenant un système de sécurité (10) installé à l'intérieur du casque de protection (1) qui communique par ondes radio (sans fil) avec le dispositif de commande (110) installé dans le motocycle (100),
ledit dispositif de commande (110) comprenant un commutateur normalement ouvert (T2) placé entre l'alimentation électrique (120) et le système d'allumage (121) du motocycle, et étant piloté par un dispositif de communication sans fil (119) qui communique avec un dispositif de communication sans fil (19) installé à l'intérieur dudit dispositif de sécurité (10) du casque de protection,
ledit dispositif de sécurité (10) comprenant des moyens de détection (15, 5-6, 13, 14) placés dans le casque de protection (1) qui sont aptes à détecter la présence de la tête de l'utilisateur dans le casque de protection (1) et le verrouillage du casque de protection (1) afin de générer un signal d'instruction qui permet audit système de communication (19)de casque de protection de communiquer avec le système de communication (119) de motocycle pour envoyer un signal d'instruction qui amène le commutateur (T2) à être placé dans son état de conduction, permettant l'allumage de motocycle, **caractérisé par le fait que** :
ledit dispositif de sécurité de motocycle (10) comprend un lecteur de carte à puce (11) connecté, par l'intermédiaire d'un commutateur normalement ouvert (T1), audit système de communication (19) de casque de protection, ledit lecteur de carte à puce (11) étant apte à lire une carte à puce (12) dans laquelle un code secret est codifié.

2. Système de sécurité selon la revendication 1, **caractérisé par le fait que** ledit dispositif de commande (110) de motocycle comprend un lecteur de carte à puce (111) apte à lire une carte à puce de secours (112) afin d'activer l'allumage de motocycle sans que la carte à puce (12) soit à l'intérieur du lecteur (11) du dispositif de sécurité de casque de protection.

3. Système de sécurité selon une ou plusieurs des revendications précédentes, **caractérisé par le fait que** l'un desdits moyens de détection comprend un détecteur métrique (13) placé à l'extérieur du casque de protection (1) pour détecter la distance du casque de protection à partir du sol.

4. Système de sécurité selon une ou plusieurs des revendications précédentes, **caractérisé par le fait que** l'un desdits moyens de détection comprend un détecteur sans fil (14) placé à l'extérieur du casque de protection (1) et communiquant avec un émetteur installé dans le motocycle (100) afin de détecter la distance du casque de protection à partir du motocycle (100).

5. Système de sécurité selon une ou plusieurs des revendications précédentes, **caractérisé par le fait que** ledit dispositif de communication (19) de casque de protection et ledit dispositif de communication (119) de motocycle sont agencés pour communiquer dans des distances inférieures à 2 mètres.

6. Système de sécurité selon une ou plusieurs des revendications précédentes, **caractérisé par le fait que** un détecteur d'inclinaison est prévu à l'intérieur dudit dispositif de commande (110), un tel détecteur d'inclinaison étant apte, en coopération avec un temporisateur, à évaluer si le motocycle est immobile ou non pendant plus d'une période de temps prédéterminée.

7. Système de sécurité selon une ou plusieurs des revendications précédentes, **caractérisé par le fait que** ledit casque de protection est équipé pour recevoir de signaux par radio à partir d'un lecteur de musique.

8. Système de sécurité selon une ou plusieurs des revendications précédentes, **caractérisé par le fait que** ledit dispositif de commande de motocycle (110) comprend :
- un émetteur-récepteur GSM (134, 135) activé par un lecteur de carte SIM (136) au moyen d'une carte SIM de téléphone (137), et
- un émetteur-récepteur sans fil (132, 133) connecté audit émetteur-récepteur GSM (134, 135) et communiquant, au moyen d'ondes radio, avec un émetteur-récepteur sans fil (32, 33) installé à l'intérieur dudit dispositif de sécurité (10) du casque de protection (10) et connecté à un microphone (30) et à deux haut-parleurs (31) montés à l'intérieur du casque de protection (1).
